# EUROPÄISCHE PATENTANMELDUNG

(11) **EP 2 538 030 A1**
(43) Veröffentlichungstag der Anmeldung: **26.12.2012**
(21) Anmeldenummer: 11170927.5
(22) Anmeldetag: 22.06.2011
(51) Int. Cl.: F01D 11/00, F01D 11/02, F16J 15/00, F16J 15/447

(54) **Labyrinth-Dichtsystem für eine Gasturbine**

(71) Anmelder: SIEMENS AKTIENGESELLSCHAFT, 80333 München (DE)
(72) Erfinder: Dungs, Sascha, Dr., 46485 Wesel (DE); Schröder, Peter, 45307 Essen (DE); Veitsman, Vyacheslav, 45879 Gelsenkirchen (DE)

(57) **Zusammenfassung**

Die Erfindung betrifft ein Dichtsystem (50) für eine Gasturbine (10) mit einem Rotor (14) und einem diesen umgebenen Stator (53), die einen Ringspalt bildend axial überlappen und dort zumindest eine Labyrinthdichtung (64) mit einem rotorseitigen Dichtungspartner (46,48) und einem statorseitigen Dichtungspartner (56) aufweisen, wobei der rotorseitige Dichtungspartner zumindest eine sich in Umfangsrichtung erstreckende Dichtspitze (60) aufweist. Um ein besonders effizientes Dichtsystem (50) für eine Gasturbine (10) anzugeben, bei der die Durchströmung der Labyrinthdichtung (64) weitestgehend vermieden wird, wird vorgeschlagen, dass die Dichtspitze (60) schraubenförmig ausgebildet ist.

## Beschreibung

Die Erfindung betrifft ein Dichtsystem für eine Gasturbine, mit einem Rotor und einem diesen umgegebenden Stator, die einen Ringspalt bildend axial einander überlappen und dort zumindest eine Labyrinthdichtung mit einem rotorseitigen Dichtungspartner und einem statorseitigen Dichtungspartner aufweist, wobei der rotorseitige Dichtungspartner zumindest eine sich in Umfangsrichtung erstreckende Dichtspitze zur Abdichtung des Ringspalts umfasst.

Ein gattungsgemäßes Dichtsystem mit einer Labyrinthdichtungen zur Abdichtung des Ringspalts ist beispielsweise aus der EP 0 894 947 B1 bekannt. Der äußere Teil der Labyrinthdichtung ist feststehend und wird von der nach innen gewandten wabenförmigen Fläche eines sogenannten U-Rings gebildet. Der innere, rotierende Teil der Labyrinthdichtung ist an der jeweiligen mantelseitigen Fläche von Dichtungsarmabschnitten, die an Rotortscheiben angeordnet sind, als endlos umlaufende Dichtspitze ausgebildet. Im Betrieb schneiden sich die Dichtspitzen in die wabenförmige, nach innen weisende Fläche des U-Rings ein und verhindern somit eine Leckageströmung durch die entsprechenden Ringspalte zwischen dem U-Ring und den Dichtungsarmabschnitten. Diese Anordnung ist jedoch sehr verschleißanfällig, da im Betrieb die Dichtspitze dauerhaft sich gegenüber dem U-Ring dreht. Eine ähnliche Anordnung ist zudem aus US 2010/0196139 A1 bekannt.

Eine alternative Anordnung eines Dichtsystems umfassend zwei aneinander liegende Rotorscheiben ist beispielsweise aus der JP 09-242505 A bekannt. Darin sind unterschiedliche Konstruktionen von Dichtungen zur Abdichtung eines Rotorinnenraums gegenüber einem Außenraum gezeigt. Die gezeigten Dichtungen verschließen einen die beiden Räume ansonsten verbindenden Spalt, welcher im Wesentlichen zwischen zwei einander gegenüberliegenden Dichtungsarmabschnitten angeordnet ist.

Es hat sich herausgestellt, dass weiterhin Bedarf an einer zuverlässigen Dichtung zur Trennung der Räume besteht. Der Bedarf ergibt sich einerseits aufgrund gesteigerter Anforderungen an die Lebensdauer des Dichtelements und andererseits an eine erhöhte Dichtigkeitsanforderung, da aufgrund steigender Druckverhältnisse von Verdichtern stationärer Gasturbinen im Innern des Rotors höhere Drücke an Kühlluft zur Kühlung von Turbinenschaufeln bereitstehen. Somit tritt ein größeres Druckgefälle gegenüber dem Außenraum auf, der durch die Dichtungsarmabschnitte und dem Dichtsystem von dem inneren Rotorraum zu trennen ist.

Aufgabe der Erfindung ist die Bereitstellung eines Dichtsystems für eine stationäre Gasturbine, welches eine verlängerte Lebensdauer unter weiterer Erhöhung der Dichtungswirkung aufweist.

Die der Erfindung zu Grunde liegende Aufgabe wird mit einem Dichtsystem gemäß den Merkmalen des Anspruchs 1 gelöst. Vorteilhafte Ausgestaltungen der Erfindung und weiterführende Merkmale sind in den abhängigen Ansprüchen angegeben.

Erfindungsgemäß ist die Dichtspitze schraubenförmig ausgebildet. Die Schraubenform muss der Drehrichtung des Rotors angepasst sein. Im Betrieb stellt sich dann aufgrund der schraubenförmigen Anordnung der Dichtspitze und deren Rotation mit dem Rotor im abzudichtenden Ringspalt eine Pumpwirkung ein, die dem Druckgefälle, welches beiderseits der Labyrinthdichtung anliegt, entgegengerichtet ist. Aufgrund der Pumpwirkung wird die Durchströmung der Labyrinthdichtung in Richtung des von außen anstehenden Druckgefälles reduziert, was zu einer verminderten Leckage führt. Ggf. ist es sogar möglich, eine Durchströmung des Ringspalts entgegen des außen anstehenden Druckgefälles durch die Labyrinthdichtung zu erzeugen. Zudem wird das Anstreifen bzw. Einschneiden der rotierenden Dichtspitze in den Stator vermieden, was die Lebensdauer der Labyrinthdichtung verlängert.

Gemäß einer weiteren vorteilhaften Ausgestaltung der Erfindung umfasst der Rotor im Überlappungsabschnitt zwei axial aneinander liegende Rotorkomponenten mit jeweils einem auf die gegenüberliegende Rotorkomponente gerichteten Dichtungsarmabschnitt, wobei die Dichtungsarmabschnitte selber spaltbildend gegenüberliegen und radial außen von einem sogenannten U-Ring umgriffen sind. An der nach innen gewandten Fläche des U-Rings ist der zweite Dichtungspartner der Labyrinthdichtung vorgesehen. Dieser ist feststehend und bildet somit den statorseitigen Dichtungspartner. An den äußeren Flächen der Dichtungsarmabschnitte ist jeweils eine schraubenförmige Dichtspitze angeordnet. Dabei sind die beiden Dichtspitzen zueinander gegenläufig orientiert. Dadurch ist es möglich, einen Rotorinnenraum, welcher innerhalb der Dichtungsarmabschnitte vorhanden ist, gegenüber einen außerhalb des Rotors und seitlich des U-Rings angeordneten Seitenraum abzudichten, so dass eine Leckageströmung aus dem Rotorinnenraum in den Seitenraum verringert oder gar vermieden wird. Im Betrieb stellt sich radial außerhalb des Axialspaltes zwischen den Dichtungsarmabschnitten ein Druck - ein Labyrinthmittendruck - ein, der auslegungsbedingt so hoch sein muss, dass dieser einen Sperrdruck gegenüber dem Rotorinnenraumdruck darstellt. Damit wird das Entweichen von im Innenraum geführter Kühlluft begrenzt. Die Dichtspitzen, d.h. Anzahl, Geometrie und Anordnung sind dabei so auszulegen, dass durch den aufgebauten Labyrinthmittendruck ein Einsaugen von Heißgas aus dem Strömungskanal vermieden wird. Um dies zu unterstützen, kann in den Ringspalt beiderseits der Labyrinthdichtung zusätzlich Sperrluft über den U-Ring eingespeist werden. Ebenfalls muss die Aufheizung der Luft bedingt durch die Reibung bei der detaillierten Betrachtung berücksichtigt werden.

Vorzugsweise sind auch am Stator Dichtspitzen vorgesehen. Diese sind jedoch nicht schraubenförmig gegenüber der Umfangsrichtung angestellt, sondern endlos umlaufend. Der besondere Vorteil dieser Ausführungsform liegt darin, dass der Axialspalt zwischen den beiden Dichtungsarmabschnitten der benachbarten Rotorkomponenten abgedichtet werden können, ohne den Einsatz eines zusätzlichen Dichtungselements. Außerdem kann die im Rotorinnenraum ohnehin vorhandene Luft zusätzlich auch noch zur Abdichtung weiterer Spalte genutzt werden. Gemäß einer weiteren vorteilhaften Ausgestaltung sind die Rotorkomponenten als Rotorscheiben ausgebildet. Ebenso von Vorteil ist die Verwendung des Dichtsystems in einer stationären Gasturbine.

Weitere Vorteile und Merkmale der Erfindung werden in einer nachfolgenden beschriebenen Ausführungsform näher erläutert. Es zeigen:
- Figur 1: eine Gasturbine in einem Längs-Teilquerschnitt,
- Figur 2: einen Ausschnitt aus Figur 1 mit zwei axial benachbarten Rotorscheiben im Bereich der Turbineneinheit und den daran angeordneten Laufschaufeln,
- Figur 3: ein Dichtsystem gemäß der Erfindung im Querschnitt und
- Figur 4: die Draufsicht auf die Abwicklung des rotorseitigen Dichtungspartners des Dichtsystems.

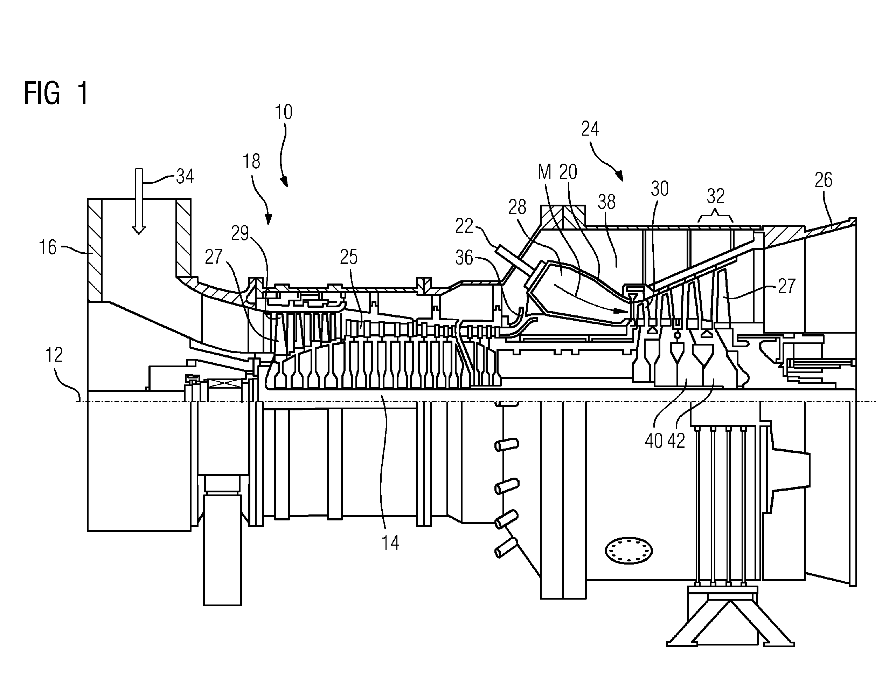

Figur 1 zeigt eine stationäre Gasturbine 10 in einem Längsteilschnitt. Die Gasturbine 10 weist im Innern einen um eine Rotationsachse 12 drehgelagerten Rotor 14 auf, der auch als Turbinenläufer bezeichnet wird. Entlang des Rotors 14 folgen aufeinander ein Ansauggehäuse 16, ein Axialturboverdichter 18, eine torusartige Ringbrennkammer 20 mit mehreren rotationssymmetrisch zueinander angeordneten Brennern 22, eine Turbineneinheit 24 und ein Abgasgehäuse 26.

Der Axialturboverdichter 18 umfasst einen ringförmig ausgebildeten Verdichterkanal 25 mit darin kaskadisch aufeinanderfolgenden Verdichterstufen aus Laufschaufel- und Leitschaufelkränzen. Die am Rotor 14 angeordneten Laufschaufeln 27 liegen mit ihren frei endenden Schaufelblattspitzen 29 einer äußeren Kanalwand des Verdichterkanals 25 gegenüber. Der Verdichterkanal 25 mündet über einen Verdichterausgangsdiffusor 36 in einem Plenum 38. Darin ist die Ringbrennkammer 20 mit ihrem Verbrennungsraum 28 vorgesehen, der mit einem ringförmigen Heißgaskanal 30 der Turbineneinheit 24 kommuniziert. In der Turbineneinheit 24 sind vier hintereinander geschaltete Turbinenstufen 32 angeordnet. Am Rotor 14 ist ein Generator oder eine Arbeitsmaschine (jeweils nicht dargestellt) angekoppelt.

Im Betrieb der Gasturbine 10 saugt der Axialturboverdichter 18 durch das Ansauggehäuse 16 als zu verdichtendes Medium Umgebungsluft 34 an und verdichtet diese. Die verdichtete Luft wird durch den Verdichterausgangsdiffusor 36 in das Plenum 38 geführt, von wo aus es in die Brenner 22 einströmt. Über die Brenner 22 gelangt auch Brennstoff in den Verbrennungsraum 28. Dort wird der Brennstoff unter Zugabe der verdichteten Luft zu einem Heißgas M verbrannt. Das Heißgas M strömt anschließend in den Heißgaskanal 30, wo es sich arbeitsleistend an den Turbinenschaufeln der Turbineneinheit 24 entspannt. Die währenddessen freigesetzte Energie wird vom Rotor 14 aufgenommen und einerseits zum Antrieb des Axialturboverdichters 18 und andererseits zum Antrieb einer Arbeitsmaschine oder elektrischen Generators genutzt.

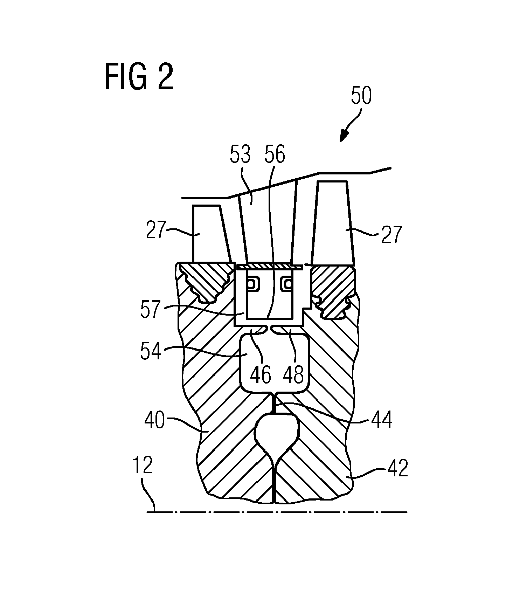

Figur 2 zeigt einen axialen Abschnitt aus dem Längsschnitt der Gasturbine 10 im Bereich der Turbineneinheit 24. Zwei axial aneinander liegende Rotorscheiben 40, 42 bilden jeweils eine Rotorkomponente. Die Rotorscheiben 40, 42 sind aufgrund einer nicht weiter dargestellten Verschraubung in einem Kontaktbereich 44 formschlüssig, flächig und mit großer Kraft aneinander gepresst, um eine schlupffreie Übertragung von Drehmomenten zu gewährleisten. Die Rotorscheiben 40, 42 sind im Wesentlichen zur Rotationsachse 12 symmetrisch ausgestaltet, abgesehen vom Bereich der Laufschaufelaufnahmen.

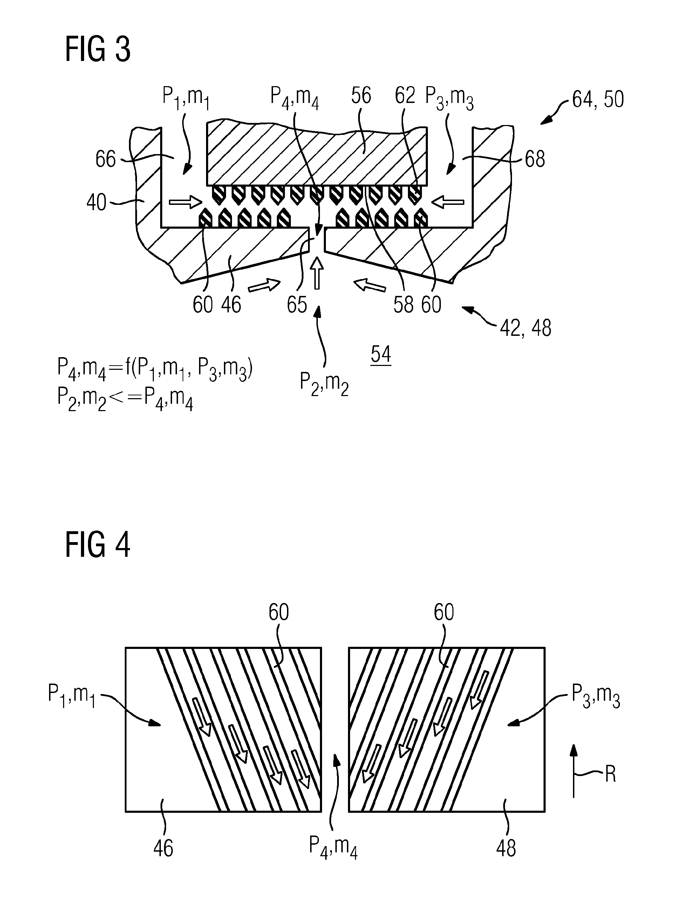

Radial weiter außen zur Kontaktfläche 44 weist jede Rotorscheibe 40, 42 einen seitlich angeordneten, ringförmigen Dichtungsarmabschnitt 46, 48 auf, der jeweils auf die gegenüberliegende andere Rotorscheibe 40, 42 gerichtet ist. Die Dichtungsarmabschnitte 46, 48 sind als Kragen ausgebildet, die in Tangentialrichtung endlos umlaufen. Radial innerhalb der beiden Dichtungsarmabschnitte 46, 48 ist ein Rotorinnenraum 54 vorgesehen, in dem während des Betriebs der Gasturbine 10 Kühlluft mit hohem Druck auftritt. Diese wird durch nicht weiter dargestellte Bohrungen, welche in den Rotorscheiben 40, 42 angesiedelt sind, zu den Füßen von in Kränzen angeordneten Laufschaufeln 27 geführt. Anschließend wird die Kühlluft durch das Schaufelinnere zu einem Schaufelblatt geleitet. Dort kühlt es das dem Heißgas ausgesetzte Schaufelblatt. Axial zwischen den Laufschaufeln 27 sind ebenfalls in einem Kranz angeordnete Leitschaufeln 53 vorgesehen, die über einen U-Ring 56 radial innen miteinander gekoppelt sind. Der U-Ring ist Teil eines Stators der Gasturbine 10 und ist in einem sogenannten Scheibenzwischenraum 57 angeordnet, welcher außerhalb des Rotors 14 der Gasturbine 10 liegt. Der Scheibenzwischenraum 57 ist durch den U-Ring 56 in zwei Seitenräume 66, 68 (Figur 3) unterteilt. Die erfindungsgemäße Ausgestaltung ist in Figur 2 nicht dargestellt.

Figur 3 zeigt ein Dichtsystem 50 für die Gasturbine 10 mit dem den U-Ring 56 aufweisenden Stator und dem von den beiden Dichtungsarmabschnitten 46, 48 der Rotorscheiben 40, 42 gebildeten Rotor 14. An jeder äußeren Umfangsfläche der Dichtungsarmabschnitte 46, 48 ist eine in Umfangsrichtung umlaufende Dichtspitze 60 angesiedelt, die sich schraubenförmig erstreckt. Somit weisen diese gegenüber der Tangentialrichtung einen Steigungswinkel auf, der ungleich 0° ist. An der nach innen gewandten Fläche des U-Rings 56 sind mehrere endlos umlaufende Dichtspitzen 62 vorgesehen. Die Dichtspitzen 62 und die Dichtspitzen 60 bilden gemeinschaftlich eine Labyrinthdichtung 64 des Dichtsystems 50. In der gezeigten Ausführungsform liegen die beiden Dichtungsarmabschnitte 46, 48 spaltbildend (65) einander gegenüber. Zudem begrenzen die beiden Dichtungsarmabschnitte 46, 48 einen Rotorinnenraum 54. Dem Rotorinnenraum 54 wird beim Betrieb der Gasturbine stetig Kühlluft zugeführt, so dass der Axialspalt 65 zwischen den Dichtungsarmabschnitten 46, 48 gegen Durchströmung zu sichern ist.

Den Seitenräumen 66, 68 zwischen der Rotorscheibe 40 und dem U-Ring 56 bzw. dem U-Ring 56 und der Rotorscheibe 42 kann von außen oder durch den U-Ring 56 Sperrluft zugeführt werden.

Im Betrieb der Gasturbine steht im Seitenraum 66 Sperrluft mit einem Druck P1, im Seitenraum 68 Sperrluft mit einem Druck P3 und im Rotorinnenraum 54 Kühlluft mit einem Druck P2 an. Aufgrund der Rotation des Rotors 14 und der Anstellung der rotorseitigen Dichtspitzen 60 gegenüber der Tangentialrichtung mit einem Steigungswinkel ungleich 0° erzeugt die Labyrinthdichtung 64 eine Pumpwirkung. Da die Dichtspitzen 60 der beiden Dichtungsarmabschnitte 46, 48 zueinander gegenläufig orientiert (Figur 4) sind, treten zwei aufeinander gerichtete Pumpwirkungen auf, die im vorliegenden Fall zu einem in der Labyrinthdichtung 64 mittig angeordneten Druck P4 führt, der für den stationären Betrieb der Gasturbine 10 geringfügig größer sein sollte als der Druck P2 der Kühlluft im Rotorinnenraum 54. Dies verhindert eine Leckage von Kühlluft durch den Axialspalt 65, die Ringspalte und weiter durch die Seitenräume 66, 68 in den Heißgaskanal der Gasturbine 10.

In Figur 4 sind die gegenüber der Tangentialrichtung und der Drehrichtung R des Rotors 14 angestellten Dichtspitzen 60 des rotorseitigen Dichtungspartners der Labyrinthdichtung 64 zu erkennen. Auch deren gegenläufige Orientierung ist der Figur zu entnehmen.

Die Dichtspitzen 60 können gemäß einer alternativen Ausgestaltung auch nach Art einer mehrgängigen Schraube ausgebildet sein.

Insgesamt betrifft die Erfindung somit ein Dichtsystem 50 für eine Gasturbine 10 mit einem Rotor 14 und einem diesen umgebenen Stator, die einen Ringspalt bildend axial überlappen und dort zumindest eine Labyrinthdichtung 64 mit einem rotorseitigen Dichtungspartner und einem statorseitigen Dichtungspartner aufweisen, wobei der rotorseitige Dichtungsparnter zumindest einen sich in Umfangsrichtung erstreckende Dichtspitze 60 aufweist. Um ein besonders effizientes Dichtsystem 50 für eine Gasturbine 10 anzugeben, bei der die Durchströmung der Labyrinthdichtung 64 weitestgehend vermieden wird, wird vorgeschlagen, dass die Dichtspitze 60 schraubenförmig ausgebildet ist.

## Patentansprüche

1. Dichtsystem (50) für eine Gasturbine (10),
mit einem Rotor (14) und einem Stator diesen umgebenden, die einen Ringspalt bildend axial überlappen und dort zumindest eine Labyrinthdichtung (64) mit einem rotorseitigen Dichtungspartner und einem statorseitigen Dichtungspartner aufweist,
wobei der rotorseitige Dichtungspartner zumindest eine sich in Umfangsrichtung erstreckende Dichtspitze (60) zur Abdichtung des Ringspalts umfasst,
**dadurch gekennzeichnet,**
**dass** die Dichtspitze (60) schraubenförmig ausgebildet ist.

2. Dichtsystem (50) nach Anspruch 1,
bei dem die Schraubenform so gewählt ist, dass eine die Durchströmung der Labyrinthdichtung (64) behindernde Pumpwirkung erzeugbar ist.

3. Dichtsystem (50) nach Anspruch 1 oder 2,
bei dem der Rotor (14) im Überlappungsabschnitt zwei axial aneinanderliegende Rotorkomponenten mit jeweils einem auf die gegenüberliegende Rotorkomponente gerichteten Dichtungsarmabschnitt (46, 48) umfasst, und dass an jedem Dichtungsarmabschnitt (46, 48) eine schraubenförmige Dichtspitze (60) angeordnet ist, die zueinander gegenläufig orientiert sind.

4. Dichtsystem (50) nach Anspruch 3,
bei dem die Rotorkomponenten als Rotorscheiben (40, 42) ausgebildet sind.

5. Stationäre Gasturbine (10) mit einem Dichtsystem (50) nach einem der vorangehenden Ansprüche.
